Europäisches Patentamt

European Patent Office

Office européen des brevets

(19)

(11) Numéro de publication : **0 380 398 B1**

## FASCICULE DE BREVET EUROPEEN

(12)

(45) Date de publication du fascicule du brevet :
15.04.92 Bulletin 92/16

(21) Numéro de dépôt : **90400172.4**

(22) Date de dépôt : **22.01.90**

㊿ Int. CI.⁵ : **B60J 10/00**, B60J 10/04

(54) **Ensemble modulaire de glace de custode pour porte d'automobile et son procédé de fabrication.**

(30) Priorité : **27.01.89 FR 8901053**

(43) Date de publication de la demande :
**01.08.90 Bulletin 90/31**

(45) Mention de la délivrance du brevet :
**15.04.92 Bulletin 92/16**

(84) Etats contractants désignés :
**AT BE CH DE ES GB IT LI LU NL SE**

(56) Documents cités :
**EP-A- 0 241 264
EP-A- 0 279 998
FR-A- 2 257 008
FR-A- 2 356 829**

(73) Titulaire : **ETABLISSEMENTS MESNEL
SOCIETE ANONYME DITE :
9 et 11, Rue de la Rivière
F-78420 Carrières-Sur-Seine (FR)**

(72) Inventeur : **Mesnel, François
6 bis, rue Salignac Fénelon
F-92200 Neuilly-Sur-Seine (FR)**
Inventeur : **Mesnel, Gérard
16, rue Victor Hugo
F-78420 Carrieres-Sur-Seine (FR)**

(74) Mandataire : **Jolly, Jean-Pierre et al
Cabinet Jolly 54, rue de Clichy
F-75009 Paris (FR)**

## Description

La présente invention concerne un ensemble modulaire de glace de custode pour porte d'automobile. L'invention concerne également le procédé de fabrication de cet ensemble modulaire.

On sait que la mise en place des glaces de custode sur les portes d'automobile pose aux constructeurs de sérieux problèmes. En effet, l'encadrement de vitre correspondant comporte un montant vertical, qui sépare la glace de custode de la glace coulissante contiguë. Ce profilé est fixé sur la carrosserie à sa base et à sa partie supérieure, compte tenu des tolérances importantes de fabrication ces carrosseries de portes, l'emplacement ainsi défini pour la glace de custode ne correspond qu'avec une large imprécision aux dimensions de la glace.

Pour les mêmes raisons, il se révèle fort délicat, dans la pratique, d'assurer de façon satisfaisante l'étanchéité de ces glaces.

On sait également que les véhicules de haut de gamme comportent sur la face interne de leurs portes des profilés d'enjolivement ou enjoliveurs, qui sont fixés sur les encadrements de vitres indépendamment des profilés d'étanchéité, à l'aide de clips ou d'agrafes, ce qui implique des opérations de fixation délicates.

La présente invention vise à remédier à ces inconvénients de la technique connue en proposant un ensemble modulaire, comprenant une glace de custode, un profilé formant montant vertical et des profilés d'étanchéité pour la glace de custode et pour la glace mobile, qui soit prêt pour la pose dans l'encadrement de vitre correspondant.

Un autre but de l'invention est de proposer un ensemble modulaire de ce type qui puisse être mis en place facilement sur les encadrements de glaces et qui assure une parfaite étanchéité au niveau de la glace de custode et de la glace mobile.

L'invention a également pour but de proposer un ensemble modulaire de ce type qui comprenne éventuellement des enjoliveurs faisant corps avec les éléments d'étanchéité et qui élimine des opérations distinctes de pose de ces enjoliveurs.

L'invention a enfin pour but de proposer un procédé de fabrication d'un tel ensemble modulaire qui puisse être mis en oeuvre moyennant un coût modique, à l'aide d'un appareillage conventionnel.

A cet effet, l'invention a pour objet un ensemble modulaire de glace de custode de porte d'automobile, comprenant sous forme monobloc :
– une glace de custode ;
– un premier profilé d'étanchéité en élastomère extrudé à armature métallique, dont une première partie à section en U est apte à coiffer des tranches de la vitre mobile de la porte d'automobile et de la vitre de custode et dont une seconde partie, à section en U inversée, est apte à coiffer en la pinçant une feuillure de l'encadrement de la glace mobile et de la glace de custode, ce profilé épousant le profil du montant avant et du montant supérieur de l'encadrement de la glace mobile, ainsi que du montant supérieur, du montant incliné et du montant inférieur de l'encadrement de la glace de custode;
– entre les parties du profilé correspondant aux tranches supérieure et inférieure de la vitre de custode, un second profilé extrudé ou moulé à armature métallique, formant montant vertical de l'encadrement de vitre de custode, dont une première partie à section en U coiffe la tranche verticale de la glace de custode et dont une seconde partie à section en U, dirigée en sens inverse de la précédente, est apte à coiffer en la guidant la vitre mobile, ce second profilé formant montant vertical étant solidaire de la portion du premier profilé correspondant à la tranche supérieure et à la tranche inférieure de la glace de custode (ensemble modulaire du type divulgué, par exemple, par EP-A-0279998) ;

cet ensemble étant caratérisé en ce que :
– une première partie du premier profilé possède une section transversale uniforme sur toute sa longueur, ce qui la rend apte à coiffer aussi bien les tranches de la vitre mobile que de la vitre de custode ;
– l'armature métallique et l'élastomère attenant des parties d'angle de ce premier profilé ont été partiellement éliminés par grugeage, pour permettre le cintrage du profilé et sont revêtus d'une matière plastique moulée qui assure la continuité du profilé ;
– l'ensemble modulaire comprend dans les parties d'angle du premier profilé, des parties en matière plastique surmoulées assurent la continuité du profilé, sa jonction avec la vitre de custode et, éventuellement, sa jonction avec le second profilé.

On connaît déjà, par EP-A-0 279 998, un profilé d'étanchéité et de guidage pour un encadrement de vitre mobile d'un véhicule d'automobile, qui présente les dispositions non présentées comme caractéristiques de l'ensemble modulaire selon l'invention tel que défini ci-dessus, mais la partie de ce profilé destinée à coiffer les tranches de la vitre mobile n'a pas la même section transversale que la partie destinée à coiffer les tranches de la vitre de custode.

En outre, les caractéristiques des parties d'angle du premier profilé de l'ensemble modulaire conforme à l'invention ne sont ni décrites, ni évoquées dans ce document antérieur.

Conformément à l'invention, le second profilé pourra être rendu solidaire du premier profilé par tout moyen connu dans la technique, par exemple à l'aide de vis, par collage ou par soudage, mais, de préférence, par moulage des parties d'angle contiguës du premier profilé contiguës au second profilé.

Avec un tel ensemble modulaire, dans lequel la glace de custode est incorporée, et dont le second profilé constitue le montant vertical qui sépare habituellement, dans les encadrements de vitre, la vitre mobile de la vitre de custode, les opérations de montage seront considérablement simplifiées.

Il sera en effet possible de mettre en place aisément et en une unique opération, sur l'encadrement de glace correspondant, la glace de custode et les profilés d'étanchéité qui y sont associés, l'opération de mise en place n'impliquant que la fixation de la façon usuelle des profilés d'étanchéité sur la bride ou la feuillure de l'encadrement de la glace de custode et de l'encadrement de la vitre mobile.

Dans une forme de réalisation préférée de l'invention, une lèvre formant enjoliveur en une matière thermoplastique moulée fera corps avec les parties du premier profilé associées à la glace de custode et éventuellement avec les parties associées à la glace mobile adjacente, cette lèvre étant attenante à la partie à section en U de ces profilés destinée à coiffer la bride ou la feuillure de l'encadrement et étant moulée sur la branche de la partie en U destinée à être tournée vers l'intérieur du véhicule.

Avec un ensemble modulaire équipé de tels enjoliveurs, le montage de ceux-ci se fera en même temps que le montage de la glace de custode, en supprimant ainsi toute opération auxiliaire compliquée, comme c'est le cas actuellement.

L'invention a également pour objet un procédé de fabrication de l'ensemble modulaire de glace de custode défini ci-dessus, caractérisé en ce que :

– On découpe aux dimensions désirées un premier profilé en un élastomère extrudé à armature métallique, du type comprenant une première partie à section en U apte à coiffer une feuillure ou une bride d'un encadrement de vitre et une seconde partie à section en U tournée en sens inverse de la précédente et apte à coiffer la tranche d'une vitre de custode et d'une vitre mobile associée ;

– On élimine par grugeage une partie de l'armature et de l'élastomère associé de ce premier profilé dans les parties correspondant aux angles des encadrements de vitre de la glace de custode et de la glace mobile associée ;

– On cintre le premier profilé au profil des encadrements de la vitre de custode et de la vitre mobile;

– On découpe à la dimension de la partie verticale de la glace de custode un second profilé dont une partie à section en U est apte à coiffer la tranche correspondante de la glace de custode et dont une seconde partie à section en U tournée en sens inverse de la précédente est apte à recevoir la glace mobile ;

– On coiffe les tranches de la glace de custode avec les parties correspondantes du premier et du second profilé ;

– On assemble éventuellement le premier et le second profilé dans les parties successives désirées ;

– On introduit dans un moule l'ensemble de glace de custode ainsi réalisé ;

– On moule sur cet ensemble les parties d'angle des profilés et éventuellement les enjoliveurs attenants à ceux-ci.

Ces enjoliveurs pourront être en toute matière moulable, notamment en une matière thermoplastique.

Les dessins annexés illustrent une forme de mise en oeuvre de l'invention. Sur ces dessins :

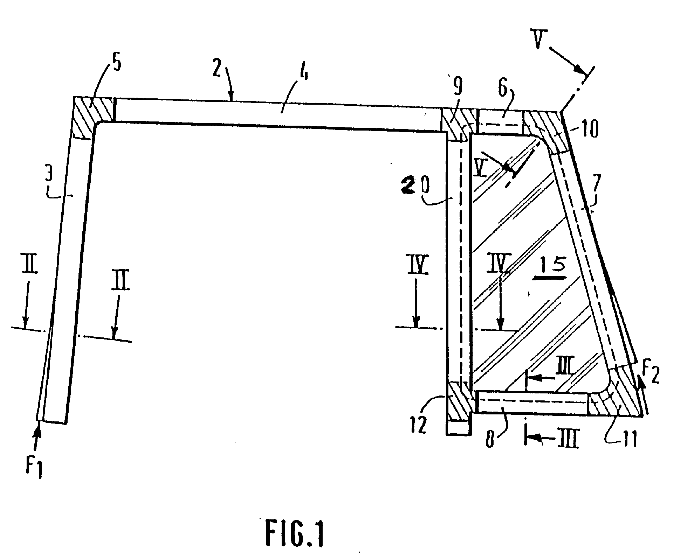

La figure 1 est une vue en élévation de l'ensemble modulaire de vitre de custode ;

Les figures 2 à 5 sont des coupes suivant les lignes II-II, III-III, IV-IV et V-V de la figure 1 ;

La figure 6 est une vue suivant les flèches $F_1$ ou $F_2$ de la figure 1.

Comme on le voit sur ces dessins, l'ensemble modulaire conforme à l'invention comprend une glace de custode 1, un premier profilé en élastomère extrudé à armature métallique 2, dont deux parties 3 et 4, réunies, par une partie l'angle 5, épousent le profil du montant avant et du montant supérieur d'un encadrement de vitre mobile, tandis que trois parties 6, 7 et 8, réunies par des parties d'angle 9, 10 et 11, coiffent respectivement les tranches supérieure, inclinée et inférieure de la glace de custode. La partie 8 se prolonge également par une partie d'angle 12.

Le profilé 1 est d'un type connu en soi. Il comprend une armature métallique 14 sur laquelle a été extrudé un élastomère 15. Il présente une partie à section en U 16, apte à coiffer en la pinçant une feuillure ou une bride de l'encadrement de vitre pour en être rendue solidaire, et un seconde partie en U 17, dirigée en sens inverse de la partie 15, apte à coiffer la tranche d'une vitre mobile ou de custode.

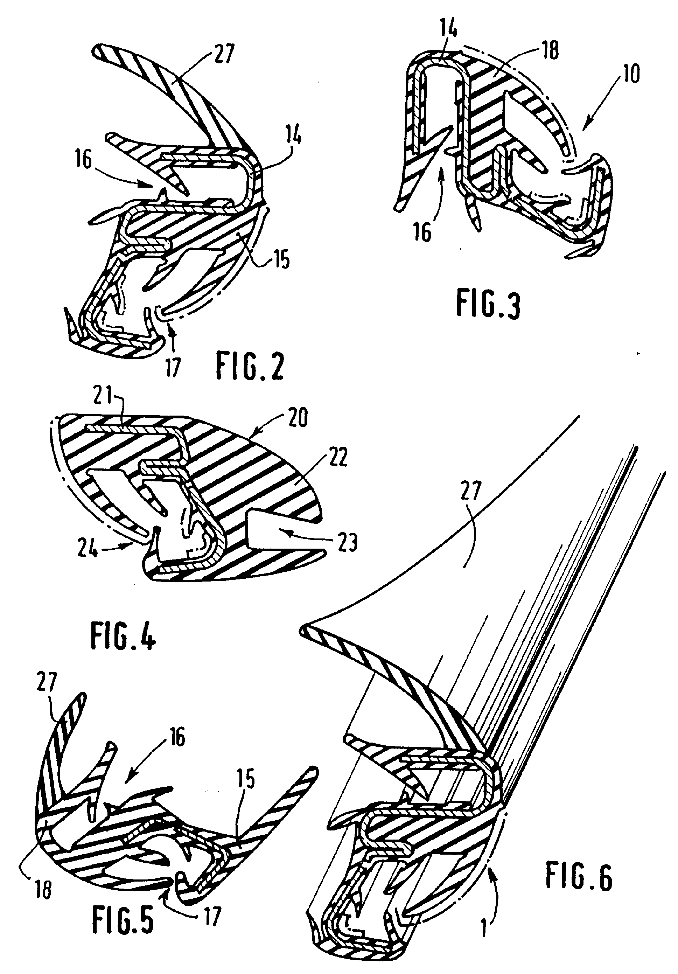

Dans les parties d'angle, comme on le voit sur la figure 5, une partie de l'armature a été éliminée par grugeage et une matière plastique 18 a été surmoulée sur le profilé, en respectant la forme de sa section, pour assurer la continuité et l'étanchéité.

Entre les parties d'angle 9 et 12, un profilé 20 est disposé perpendiculairement aux montants 6 et 8. Ce profilé est solidaire des parties 9 et 10 du profilé 1 sur lesquelles il peut être fixé à l'aide de vis ou plus simplement par thermosoudage au cours de l'opération de moulage que l'on décrira ci-après.

Ce profilé 20 comporte une armature 21 gainée d'un élastomère 22. Dans celui-ci est prévue un gorge 23, destinée à coiffer la tranche verticale de la vitre de custode 1, tandis que, de l'autre côté du profilé, est ménagée une partie à section 24 en U, destinée à assurer le guidage et l'étanchéité de la vitre mobile.

L'ensemble modulaire conforme à l'invention pourra donc être monté en une seule opération sur les encadrements de vitre, ce qui constitue un avantage important, puisque l'on met en place, en une phase unique, la glace 15 de custode, les parties des profilés d'étanchéïté 6, 7, 8 et 20 de cette glace, les parties de profilés d'étanchéïté et de guidage 3 et 4 de la vitre mobile et le profilé 20 formant montant vertical. Il est clair que l'on réalise ainsi un gain appréciable par rapport à la technique antérieure, d'autant que le montant vertical métallique d'encadrement de vitre n'a plus de raison d'être sur la carrosserie de porte.

On limitera encore davantage les opérations usuelles de montage en remplaçant les enjoliveurs indépendants que l'on fixe habituellement à l'intérieur de la porte par des lèvres moulées 27 formant corps avec les profilés (voir Figure 6), par exemple avec les parties 3 et 7 du profilé 1, avec lesquelles elles sont ainsi montées sans opération distincte.

L'ensemble modulaire pourra être réalisé de façon simple en prédécoupant le profilé 1 à la longueur désirée et en dégageant de la façon souhaitée les parties d'angle afin de pouvoir le cintrer au profil des encadrements de vitre.

Après cintrage, on coiffe avec les parties 6, 7 et 8 les tranches correspondantes de la glace 1 de custode et, avec un profilé 20 prédécoupé à la longueur convenable, on coiffe la tranche verticale de cette glace.

On place ensuite l'ensemble dans un moule et l'on procède au moulage des parties d'angle 9, 10, 11 et 12 qui solidarisent, d'une part, les profilés et la glace de custode et, d'autre part, les profilés 2 et 20 entre eux. On moule simultanément les enjoliveurs 27 et l'on obtient ainsi un ensemble prêt à être monté en une unique opération sur les encadrements de vitre d'une porte d'automobile.

**Revendications**

1. Un ensemble modulaire de glace du custode de porte d'automobile, comprenant sous forme monobloc :
   – une glace de custode (1);
   – un premier profilé (2) d'étanchéité en élastomère extrudé à armature métallique, dont une première partie (17) à section en U est apte à coiffer des tranches de la vitre mobile de la porte d'automobile et de la vitre de custode et dont une seconde partie (16) à section en U inversée, est apte à coiffer en la pinçant une feuillure de l'encadrement de la glace mobile et de la glace de custode, ce profilé épousant le profil du montant avant et du montant supérieur de l'encadrement de la glace mobile, ainsi que du montant supérieur, du montant incliné et du montant inférieur de l'encadrement de la glace de custode;
   – entre les parties du profilé correspondant aux tranches supérieure et inférieure de la vitre de custode, un second profilé (20) extrudé ou moulé à armature métallique (21), formant montant vertical de l'encadrement de vitre de custode, dont une partie (23) à section en U coiffe la tranche verticale de la glace de custode et dont une seconde partie (24) à section en U, dirigée en sens inverse de la précédente, est apte à coiffer en la guidant la vitre mobile, ce second profilé formant montant vertical étant solidaire de la portion du premier profilé correspondant à la tranche supérieure et à la tranche inférieure de la glace de custode ;
   cet ensemble étant caractérisé en ce que :
   – une première partie (17) du premier profilé (2) possède une section transversale uniforme sur toute sa longueur, ce qui la rend apte à coiffer aussi bien les tranches de la vitre mobile que de la vitre de custode ;
   – l'armature métallique (14) et l'élastomère (15) attenant des partie d'angle de ce premier profilé (2) ont été partiellement éliminés par grugeage, pour permettre le cintrage du profilé et sont revêtus d'une matière plastique moulée qui assure la continuité du profilé ;
   – l'ensemble modulaire comprenant dans les parties d'angle (5,9,10,11,12) du premier profilé (2), des parties en matière plastique surmoulées assurant la continuité du profilé, sa jonction avec la vitre de custode et, éventuellement, sa jonction avec le second profilé (20).

2. Ensemble modulaire selon la revendication 1, caractérisé en ce qu'il comporte des lèvres (27) formant enjoliveurs, surmoulées sur certaines parties (3,7) du premier et/ou du second profilé.

3. Procédé de fabrication d'un ensemble modulaire de glace de custode selon l'une des revendications 1 et 2, caractérisé en ce que :
   – On découpe aux dimensions désirées un premier profilé (2) en un élastomère extrudé à armature métallique, du type comprenant une première partie (16) à section en U apte à coiffer une feuillure ou un bride d'un encadrement de vitre et une seconde partie (17) à section en U tournée en sens inverse de la précédente et apte à coiffer la tranche d'une vitre de custode et d'une vitre mobile associé ;
   – On élimine par grugeage une partie de l'armature (14) et de l'élastomère (15) associé de ce premier profilé dans les parties correspondant aux angles des encadrements de vitre de la glace de custode et de la glace mobile associée ;
   – On cintre le premier profilé (2) au profil des encadrement de la vitre de custode et de la vitre mobile;
   – On découpe à la dimension de la partie verticale de la glace de custode un second profilé (20) dont une partie à section en U (23) est apte à coiffer la tranche correspondante de la glace de custode (1) et dont une seconde partie arrière (24) à section en U tournée en sens inverse de la précédente est apte à recevoir la glace mobile ;
– On coiffe les tranches de la glace de custode (1) avec les parties correspondantes (6,7,8)du premier et du second profilé ;
– On assemble éventuellement le premier et le second profilé dans les parties successives désirées ;
– On introduit dans un moule l'ensemble de glace de custode ainsi réalisé ;
– On moule sur cet ensemble les parties d'angles des profilés et éventuellement les enjoliveurs (27) attenants à ceux-ci.

## Patentansprüche

1. Scheibenmodul für eine Kraftfahrzeugtür, welches in Monoblockform umfaßil:
– eine Seitenscheibe (1) in dem Karosserieteil über dem Hinterrad;
– ein erstes Dichtungsgrofil (2) aus extrudiertem Elastomer mit metallischer Armierung, wobei ein erster Bereich (17) mit U-förmigem Querschnitt zum Umfassen der Ränder der beweglichen Scheibe der Automobiltür und der Seitenscheibe geeignet ist und wobei ein zweiter Bereich (16) mit inversem U-förmigen Querschnitt zum Umfassen eines Falzes des Rahmens der beweglichen Scheibe und der Seitenscheibe durch Klemmen geeignet ist, wobei das Profil sich an das Profil der vorderen Strebe und-der oberen Strebe des Rahmens der beweglichen Scheibe sowie der oberen Strebe, der geneigten Strebe und der unteren Strebe des Rahmens der Seitenscheibe anpaßt;
– zwischen den Bereichen des Profils, welche dem oberen und unteren Rand der Seitenscheibe entsprechen, ein zweites extrudiertes oder geformtes Profil (20) mit metallischer Armierung (21), welches die vertikale Strebe des Rahmens der Seitenscheibe bildet, wobei ein Bereich (23) mit U-förmigem Querschnitt den vertikalen Rand der Seitenscheibe um.reift und wobei ein zweiter Bereich (24) mit zum vorhergehenden invers orientiertem U-förmigen Querschnitt zum Umfassen der beweglichen Scheibe für deren führung geeignet ist, wobei das die vertikale Strebe bildende zweite Profil mit dem Abschnitt des ersten Profils verbunden ist, welcher dem oberen Rand und dem unteren Rand der Seitenscheibe entspricht, dadurch gekennzeichnet, daß
– ein erster Bereich (17) des ersten Profils (2) einen einheitlichen Querschnitt über seine gesamte Länge aufweist, welcher ihn auch für ein Umfassen der Rander der beweglichen Scheibe und der Seitenscheibe geeignet macht;
– die metallische Armierung (14) und das Elastomer (15), welche an Eckbereiche des ersten Profils (2) anschließen, tellweise durch ein Ausnehmen entfernt sind, um ein Biegen des Profils zu ermöglichen, und mit einem geformten Kunststoff bedeckt sind, welcher die Kontinuität des Profils sicherstellt;
– das Modul in den Eckbereichen (5,9,10,11,12) des ersten Profils (2) angeformte Bereiche aus Kunststoff umfaßt, welcher die Kontinuität des Profils, seine Verbindung mit der Seitenscheibe und gegebenenfalls seine Verbindung mit dem zweiten Profil (20) sicherstellt.

2. Modul nach Anspruch 1, dadurch gekennzeichnet, daß es Zierleisten bildende Lippen (27) umfaßt, welche an gewissen Bereichen (3,7) des ersten und-/oder zweiten Profils angeformt sind.

3. Verfahren zur Herstellung eines Scheibenmoduls nach einem der Ansprüche 1 oder 2, dadurch gekennzeichnet, daß:
– ein erstes profil (2) aus extrudiertem Polymer mitmetallischer Armierung auf die gewünschten bemessungen geschnitten wird, welches Profil einen ersten Bereich (16) mit U-förmigem Querschnitt zum Umfassen eines Falzes oder eines Flansches eines Rahmens der Scheibe und einen zweiten Bereich (17) mit invers zum ersten gerichtetem U-förmigen Querschnitt zum Umfassen des Randes einer Seitenscheibe in dem Karosserieteil über dem Hinterrad und einer zugehörigen beweglichen Scheibe umfaßt;
– durch Ausnehmen ein Bereich der Armierung (14) und des zugehörigen Elastomers (15) des ersten Profils in den Ecken des Rahmens des Glases der Seitenscheibe und der zugehörigen beweglichen Scheibe eliminiert wird;
– das erste Profil (2) auf das Profil des Rahmens der Seitenscheibe und der beweglichen Scheibe gebogen wird;
– ein zweites Profil (20) auf die Dimensionen des vertikalen Abschnittes der Seitenscheibe geschnitten wird, wobei ein Bereich mit U-förmigem Querschnitt (23) dieses Profile zum Umfassen des entsrechenden Randes der Seitenscheibe (1) geeignet ist und wobei ein zweiter hinterer Bereich (24) mit zum ersten invers gerichtetem U-förmigen Querschnitt zur Aufnahme der beweglichen Scheibe geeignet ist;
– die Ränder der Seitenscheibe (1) durch die entsprechenden Bereiche (6,7,8) des ersten und zweiten Profils umfaßt werden;
– gegebenenfalls das erste und das zweite Profil in gewünschten aufeinanderfolgenden Bereichen zusammengebaut werden;
– das derart hergestellte Scheibenmodul in eine Form eingebracht wird; und
– an diese Einheit die Eckbereiche der Profile und die gegebenenfalls daran anschließenden Zierleisten (27) angeformt werden.

## Claims

1. A modular fixed side window assembly for a motor vehicle door comprising in one-piece form:
   – a fixed side window (1);
   – a first sealing member (2) of extruded elastomer with a metal reinforcement, of which a first portion (17) of U-shaped section is arranged to fit over the edges of the movable window of the motor vehicle door and the fixed side window pane and of which a second portion (16) of reversed U-shaped section is arranged to fit over and grip a rabbet of the frame structure of the movable window and the fixed side window, said sealing member matching the profile of the front frame member and the upper frame member of the frame structure of the movable window, as well as the upper frame member, the inclined frame member and the lower frame member of the frame structure of the fixed side window;
   – between the portions of the sealing member corresponding to the upper and lower edges of the fixed side window a second extruded or moulded member (20) with a metal reinforcement (21), forming a vertical frame member of the frame structure of the fixed side window, of which a portion (23) of U-shaped section fits over the vertical edge of the fixed side window and of which a second portion (24) of U-shaped section, which is directed in the opposite direction to the preceding portion, is arranged to fit over the movable window, for guiding same, the second member forming a vertical frame member being fixed with respect to the portion of the first sealing member corresponding to the upper edge and to the lower edge of the fixed side window;
   said assembly being characterised in that:
   – a first portion (17) of the first member (2) is of a uniform cross-section over its entire length, which makes it capable of fitting over both the edges of the movable window and of the fixed side window;
   – the metal reinforcement (14) and the elastomer (15) adjoining the angle portions of said first member (2) have been partially removed by notching to permit bending of the member and are covered with a moulded plastics material which ensures continuity of the member;
   – the modular assembly comprises in the angle portions (5, 9, 10, 11, 12) of the first member (2) portions of plastics material which are moulded thereon to ensure continuity of the member, its junction to the fixed side window and possibly its junction to the second member (20).

2. A modular assembly according to claim 1 characterised in that it comprises lips (27) forming embellishment trims, which are moulded on to certain portions (3, 7) of the first and/or second memberer.

3. A process for the production of a modular fixed side window assembly according to one of claims 1 and 2 characterised by:
   – cutting to the desired dimensions a first member (2) of an extruded elastomer with a metal reinforcement, of the type comprising a first portion (16) of U-shaped section capable of fitting over a rabbet or a flange of a window frame structure and a second portion (17) of U-shaped section directed in the opposite direction to the preceding portion and capable of fitting over the edge of a fixed side window and an associated movable window;
   – eliminating by notching a portion of the reinforcement (14) and the associated elastomer (15) of said first member in the portions corresponding to the angles of the window frame structures of the fixed side window and the associated movable window;
   – bending the first member (2) to the profile of the frame structures of the fixed side window and the movable window;
   – cutting to the dimension of the vertical portion of the fixed side window a second member (20) of which a portion (23) of U-shaped section is capable of fitting over the corresponding edge of the fixed side window (1) and of which a second rear portion (24) of U-shaped section which is directed in the opposite direction to the preceding portion is capable of receiving the movable window;
   – fitting the corresponding portions (6, 7, 8) of the first and second members over the edges of the fixed side window (1);
   – possibly assembling the first and second members in the successive desired portions;
   – introducing the resulting fixed side window assembly into a mould; and
   – moulding on to said assembly the angle portions of the members and possibly the embellishment trims (27) adjoining same.

FIG.1

FIG.2

FIG.3

FIG.4

FIG.5

FIG.6